(19) Europäisches Patentamt
European Patent Office
Office européen des brevets

(11) Veröffentlichungsnummer: **0 214 551 B1**

(12) **EUROPÄISCHE PATENTSCHRIFT**

(45) Veröffentlichungstag der Patentschrift: **10.04.91**

(51) Int. Cl.5: **C08K 5/52**, C08F 20/12, C08F 2/44

(21) Anmeldenummer: **86111849.5**

(22) Anmeldetag: **27.08.86**

# (54) Härtbare Giessharze.

(30) Priorität: **07.09.85 DE 3531913**

(43) Veröffentlichungstag der Anmeldung: **18.03.87 Patentblatt 87/12**

(45) Bekanntmachung des Hinweises auf die Patenterteilung: **10.04.91 Patentblatt 91/15**

(84) Benannte Vertragsstaaten: **DE FR GB IT NL**

(56) Entgegenhaltungen:
**EP-A- 0 107 764**
**US-A- 4 221 697**

(73) Patentinhaber: **Röhm GmbH**
**Kirschenallee Postfach 4242**
**W-6100 Darmstadt 1(DE)**

(72) Erfinder: **Ittmann, Günther**
**Waldstrasse 11**
**W-6114 Gross-Umstadt(DE)**
Erfinder: **Krieg, Manfred, Dr.**
**Kesselhutweg 19**
**W-6100 Darmstadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft Gießharze mit hohen Anteilen an feinteiligen Füllstoffen und von dünnflüssiger Konsistenz, die sich in an sich bekannter Weise, z.B. durch Zusatz geeigneter Initiatoren sowohl unter Druck als auch ohne Druck härten lassen.

Als Gießharze bezeichnet man allgemein flüssige oder durch mäßige Erwärmung verflüssigbare, in Formen vergießbare Kunstharze.

Aus der DE-PS 2 449 656 sind stabile, fließfähige, formbare und härtbare Massen einer polymerisierbaren, organischen Flüssigkeit und teilchenförmigen, anorganischen Füllstoffen bekannt, erhalten durch Dispergieren eines Füllstoffs (B) in einem Bestandteil (A) in Gegenwart eines Dispergiermittels (C) und gegebenenfalls eines Bindemittels (D), wobei (A), (B), (C) und (D) die folgenden Bedeutungen haben:

(A) Ein organischer flüssiger Präkursor mit einer Viskosität bei der Formgebungstemperatur der härtbaren Masse von maximal 5,0 Pa•s der aus

A 1) einem flüssigen Monomeren oder Monomerengemischen, das bzw. die unter Polymerisation oder Polyaddition ein festes Polymeres bilden kann bzw. können, bei dem die wiederkehrenden Einheiten in der polymeren Kette durch C - C-Bindungen oder durch C - C-Bindungen, die durch die Heteroatome O, N oder Si unterbrochen sind, verknüpft sind, oder

A 2) einer Mischung von einem oder mehreren vorgebildeten Polymeren mit einem oder mehreren Monomeren, deren monomerer Bestandteil unter Polymerisation oder Polyaddition ein festes Polymeres bilden kann, oder

A 3) einem partiell polymerisierten Material oder einem Präpolymeren, das unter Polymerisation oder Polyaddition ein festes Polymeres zu bilden vermag,

(B) 20 bis 90 Vol.-% wenigstens eines feinteiligen, anorganischen Füllstoffs mit einem elastischen Schermodul von mindestens 5 GN $m^{-2}$ und einer maximalen Teilchengröße von 100 $\mu$m, wobei mindestens 95 % der Teilchen eine Größe von höchstens 10 $\mu$m und höchstens 10 % der Teilchen eine Größe von höchstens 0,1 $\mu$m haben.

(C) Wenigstens 0,01 $g.m^{-2}$, bezogen auf die Gesamtoberfläche der Teilchen des Bestandteils (B), eines polymeren Dispersionsmittels mit zumindest einer polymeren Kette mit einem Molekulargewicht von zumindest 500, das eine oder mehrere Verankerungsgruppen enthält, die zur Assoziierung mit dem Füllstoff (B) befähigt sind, mit der Maßgabe, daß (a) die polymere Kette so ausgewählt ist, daß sie durch den flüssigen polymerisierbaren Bestandteil (A) in dem Maß solvatisierbar ist, daß sie - als unabhängiges Molekül - in dem Bestandteil (A) eine bedeutend bessere Löslichkeit aufweist als in einem Thetalösungsmittel, (b) das polymere Dispersionsmittel mit dem Produkt der Polymerisation des Bestandteils (A) verträglich ist, und (c) gegebenenfalls funktionelle Gruppen enthält, die zur Pfropfung oder Copolymerisation mit den in der Komponente A anwesenden Monomeren während der Härtungsoperation fähig sind,

(D) Niedermolekulares Bindemittel mit einer oder mehreren zur Wechselwirkung mit den im Bestandteil (B) vorhandenen Gruppen befähigten Gruppe(n) sowie einer oder mehreren Gruppen, die mit dem durch Polymerisation des flüssigen Präkursors (A) gebildeten Polymeren copolymerisieren oder Pfropfungen eingehen können.

In der DE-OS 33 31 371 werden Gießharze auf Basis von Acrylsäureestern mit einem hohen Anteil an feindispersen Füllstoffen vorgeschlagen. Die Gießharze enthalten ein Gemisch aus Organosiliciumverbindungen mit funktionellen Gruppen und Metallsäureestern von Metallen der IV. und V. Nebengruppe des Periodensystems. Die funktionelle Gruppe der Organosiliciumverbindung ist ethylenisch ungesättigt und entweder direkt oder über Alkylengruppen mit dem Siliciumatom verbunden; sie kann ein oder mehrmals im Molekül enthalten sein. Der Zusatz dieses Gemisches zu den an sich bekannten Gießharzen bewirkt eine erwünschte Herabsetzung der Viskosität dieser Harze, die beispielsweise zur Herstellung von Sanitärartikeln eingesetzt werden.

Erwünscht sind dünnflüssige Gießharze mit hohen Anteilen an feinteiligen Füllstoffen. Diese Füllstoffe können zur Erhöhung der Biegefestigkeit und Schlagzähigkeit der aus den Gießharzen hergestellten Formkörper beitragen. Hohe Füllstoffanteile sind ferner erwünscht, weil mit steigendem Anteil der Polymerisationsschrumpf, der während der Härtung des Gießharzes stattfindet, abnimmt und zudem die Härtungszeiten verringert werden.

Bei der Herstellung der Formkörper wirkt sich verständlicherweise eine niedrige Viskosität der Gießharze günstig aus, erlaubt sie doch die Formen möglichst formgenau auszufüllen und den notwendigen Füllgrad zu erreichen. Die Lösungen des Standes der Technik konnten nicht in jeder Hinsicht befriedigen. Eines der Hauptprobleme bei der Herstellung dünnflüssiger hochgefüllter Gießharze liegt im Einbringen des anorganischen Füllstoffs in die infolge des Monomerengehalts ungesättigte organische Phase. Die anorganischen Füllstoffe wie z.B. Cristobalit, Quarzmehl u.dgl. können in Mengen von 50 - 80 Gew.-% der Monomerenmischung nicht direkt zugesetzt werden, da unweigerlich eine bröckelige Masse entsteht, die zum Vergießen in eine Form ungeeignet ist. Um gute mechanische Eigenschaften zu erreichen, muß eine chemische Verknüpfung zwischen anorganischer und organischer Phase hergestellt werden. Diese Verknüpfung kann in an sich bekannter Weise mit Organosiliciumverbindungen bewirkt werden.
Das Einbringen des anorganischen Anteils in die organische Phase wird gemäß der DE-OS 24 49 656 mit Hilfe **polymerer** Dispergiermittel erreicht. Bereitstellung und Handhabung der polymeren Dispergiermittel sind relativ aufwendig und kompliziert. Erwünscht war somit eine weniger aufwendige Lösung. Die DE-OS 33 31 371 wendet Organosiliciumverbindungen unter Katalyse mit Metallsäureestern der IV. und V. Nebengruppe des Periodensystems an.
Im ersteren Fall wird nach der Entflockung mit dem polymeren Dispergiermittel mit Organosiliciumverbindungen silanisiert, um den Verbund zwischen der organischen und der anorganischen Phase zu erreichen. Im zweiten Fall wird die Entflockung des anorganischen Füllstoffs während der Silanisierung mit Organosiliciumverbindungen und den Metallsäureestern erreicht.
Bei der praktischen Durchführung sind Schwierigkeiten nicht auszuschließen, z.B. bei der Entformung. Schwierigkeiten bei der Entformung begegnet man durch Zusatz an sich bekannter Trennmittel. Als Trennmittel können z.B. Metallseifen, wie z.B. Metallstearate, Silikone, Polymere, wie Polyamide und Polyethylene, Talkum, Glimmer u.ä. verwendet werden. Die Trennmittel zeigen jedoch die Tendenz, sich an den Oberflächen anzureichern und somit die Materialqualität in den oberflächennahen Bereichen der gegossenen Werkstücke zu beeinträchtigen. Zur Beurteilung kann zum Beispiel der Heißwasserwechseltest [nach CEN TC 86 Teil 2 (100 °C)] herangezogen werden. Zu den Gießharzen der oben dargestellten Art herstellbaren Formkörpern gehören u.a. Sanitärgegenstände wie z.B. Spülen, Waschbecken usw. Allgemein eröffnen sie die Aussicht auf den Ersatz der unter relativ hohem Energieaufwand hergestellten keramischen Werkstoffe.

Es wurde gefunden, daß zur Lösung der bestehenden Aufgabe härtbare Gießharze auf Basis von fließfähigen, härtbaren Polymervorstufen mit einem hohen Gehalt an feinteiligen, anorganischen Füllstoffen unter Verwendung von Organosiliciumverbindungen als Haftvermittler ausgehend von einer die härtbaren Bestandteile enthaltenden organischen Phase, welche einen Gehalt von höchstens 5 Gew.-% und mindestens 0,01 Gew.-% Lecithin bezogen auf die härtbaren Gießharze besitzt, besonders geeignet sind.
Bei der Anwendung der Gießharze gemäß der vorliegenden Erfindung kann auf die Mitverwendung von Trennmitteln verzichtet werden.

Die organische Phase

Definitionsgemäß umfaßt die organische Phase die härtbaren organischen Bestandteile in Form einer flüssigen Polymervorstufe FP. Als flüssige Polymervorstufen FP eignen sich Monomere M bzw. Mischungen von Monomeren M, vorzugsweise unter Zusatz von Präpolymerisaten PM, die unter Bildung eines bei Raumtemperatur festen Polymeren - vorzugsweise radikalisch - polymerisiert werden können. Die vorliegende Erfindung schließt in dieser Hinsicht an die Lehre des Standes der Technik (z.B. die "Präkursoren" der DE-OS 24 49 656) an. Im allgemeinen weisen die flüssigen Polymervorstufen FP eine Viskosität von $\leq$ 5 Pa s bei den zur Formgebung vorgesehenen Temperaturen auf, vorzugsweise $\leq$0,1 Pa s.
Genannt seien vinylische Monomere oder Vinyliden-Monomere (= Monomere M, vgl. Ullmanns Encyklopädie der Technischen Chemie, 3. Aufl., Bd. 14 , pg. 108-110, Urban & Schwarzenberg, 1963), wie z.B. Vinylester- und -ether, saure Vinylverbindungen, vinylische Carbonylverbindungen, Vinylaromaten und heterocyclische Vinylverbindungen, Olefine, halogenierte Olefine, insbesondere Derivate der Acryl- und der Methacrylsäure. Bevorzugt werden im letzteren Falle Monomere der Formel I

$$CH_2 = \overset{\displaystyle R}{\overset{|}{C}} - \overset{\displaystyle O}{\overset{\|}{C}} - OR_1 \qquad \text{I}$$

worin R für Wasserstoff oder Methyl, $R_1$ für einen gegebenenfalls verzweigten, gegebenenfalls substituierten Alkylrest mit 1 bis 18 Kohlenstoffatomen oder einen gegebenenfalls substituierten Arylrest mit 6 bis 10 Kohlenstoffatomen steht. Als Substituenten seien an sich bekannte Substituenten wie Halogen, Hydroxy, Alkoxy-, Dialkylamino-substituenten mit $C_1$ - $C_{17}$-Alkylresten, vorzugsweise $C_1$-$C_6$-Alkylresten genannt.
Genannt seien als Monomere M insbesondere die Verbindungen der Formel I, worin $R_1$ für Alkylreste mit 1

bis 8 Kohlenstoffatomen steht, insbesondere Ethylacrylat und -methacrylat, Propylacrylat und -methacrylat, Butylacrylat und -methacrylat mit den Isomeren, 2-Ethylhexylacrylat und -methacrylat, Phenylacrylat und -methacrylat, Benzylacrylat-und -methacrylat und speziell Methylmethacrylat. Ferner können die flüssigen Polymervorstufen FP noch an sich bekannte vernetzungsfähige Monomere enthalten, z.B. solche die mindestens zwei polymerisationsfähige Vinylgruppen im Molekül enthalten. (Vgl. H. Rauch-Puntigam, Th. Völker, "Acryl- und Methacrylverbindungen", S. 184, Springer Verlag, 1967). Genannt seien z.B. Ethylenglykoldimethacrylat, 1,4-Butandioldimethacrylat, Triglykoldimethacrylat, Trimethylolpropantrimethacrylat, Allylverbindungen wie Allylmethacrylat oder Triallylcyanurat, Allyldiglycolcarbonat. Vorteilhafterweise enthält das Gießharz nicht mehr als 10 Gew.-% an vernetzenden Monomeren. Der Gehalt an Vernetzer liegt im allgemeinen bei 0,01 bis 10 Gew.-%, vorzugsweise 1 bis 5 Gew.-% bezogen auf die Gesamtheit der Monomeren. Als Comonomere können ferner weitere, mit (Meth)acrylestern copolymerisierbare Monomere verwendet werden, z.B. die bereits vorstehend genannten Vinylaromaten und heterocyclischen Vinylverbindungen, wie Styrol, die Methylstyrole wie α-Methylstyrol, und Divinylbenzol, Vinylpyrrolidon, Vinylpyridin, Acrylnitril und Methacrylnitril, Vinylester wie Vinylacetat- und -propionat, Vinylchlorid und Vinylidenchlorid. Im allgemeinen überwiegt der gewichtsmäßige Anteil der von der (Meth)acrylsäure abgeleiteten Derivate (>50 Gew.-%), speziell der Ester der Formel I und der vernetzenden Monomeren. Er kann vorteilhaft bis 100 Gew.-% der Polymervorstufe FP ausmachen. Besonders günstig ist ein Gemisch aus den Monomeren Methylmethacrylat und einem vernetzenden Monomeren wie z.B. Glykoldimethacrylat. Vorteilhaft liegt das Gewichtsverhältnis bei 100 : 2. Vorteilhafterweise besteht die flüssige Polymervorstufe FP aus Monomeren M wie vorstehend erläutert, vorzugsweise unter Zusatz von Präpolymerisaten PM. Die Präpolymerisate PM sind im allgemeinen aus denselben Typen von Monomeren aufgebaut wie die vorstehend erläuterten Monomeren M, enthalten jedoch keine funktionalisierten Monomeren. Es gelten auch im allgemeinen dieselben Proportionen wie für die Monomeren M angegeben. Die monomeren Bestandteile der Präpolymerisate PM können identisch sein mit den Monomeren M oder auch von diesen verschieden. Vorzugsweise sind die Präpolymerisate PM in den Monomeren gelöst, sie können aber auch darin dispergiert sein. Die Präpolymerisate haben in der Regel Molekulargewichte im Bereich $10^4$ bis $2.10^5$. (Bestimmt mittels Gelchromatographie). Der Zusatz der Präpolymerisate dient ausschließlich der Beeinflussung der Viskosität. Der Anteil der Präpolymerisate an den flüssigen Polymervorstufen FP liegt im Allgemeinen im Bereich 0 bis 20.-%, vorzugsweise 1 bis 10 Gew.-%. Die Konzentration ist stark abhängig vom $\eta_{spez}/C$ des Polymeren. Genannt sei z.B. ein Präpolymerisat aus Methylmethacrylat und Methacrylat im Gewichtsverhältnis 9 : 1 mit reduzierter Viskosität $\eta_{spez}/C$ von 110.

Der Lecithingehalt

Als erfindungswesentlich muß der Zusatz von Lecithin zu der die härtbaren Bestandteile enthaltenden organischen Phase betrachtet werden. Die Verwendung polymerer Dispersionsmittel ist bei den Gießharzen der vorliegenden Erfindung auszuschließen. Die für die vorliegende Erfindung erhebliche Wirkung wird von den im Handel befindlichen Lecithin-Typen hervorgerufen. Es besteht daher kein Zwang zur Verwendung spezieller, besonders aufgereinigter oder chemisch behandelter Lecithine. Lecithine kommen bekanntlich in allen pflanzlichen Ölen vor, jedoch spielen nur die aus Sojabohnen, Raps und Sonnenblumen gewonnenen Produkte technisch ehe Rolle. Den dominierenden Bestandteil der Lecithine bilden in jedem Fall die Phospholipide. In der Regel ist die primäre OH-Gruppe des Glycerins mit einer gesättigten Fettsäure, die sekundäre mit einer ungesättigten Fettsäure verestert. (Vgl. Ullmanns Encyklopädie der technischen Chemie, 4. Aufl., Bd. 16, S. 105-107, Verlag Chemie; Kirk-Othmer 3rd Ed. Vol. 14 , pg. 254-269, J. Wiley, 1981). Die Lecithine aus Sojabohnen enthalten als Fettsäurekomponente überwiegend Palmitinsäure, Stearinsäure, Palmitoleinsäure, Oleinsäure, Linolsäure und Linolensäure.
Die Jodzahl (IZ: Vgl. Ullmanns Encyklopädie der techn. Chemie, 3. Aufl., Bd. 7, S. 546-547, Urban & Schwarzenberg, 1956) dieser Produkte liegt in der Regel bei ca. 95; die Verseifungszahl (VZ: Vgl. Ullmanns Encyklopädie der techn. Chemie, 4. Auflage, Bd. 11 , S. 498, Verlag Chemie, 1976) bei ca. 190-200.

Nach bisher vorliegenden Ergebnissen eignen sich im Handel angebotene Lecithine zur Anwendung im Sinne der vorliegenden Erfindung.
Der HLB-Wert (= hydrophile-lipophile balance) des gewöhnlichen Handelslecithins (fluid natural) liegt bei ca. 3,6 (vgl. Becher and Birkmeier, J.Am.Oil. Chem.Soc. 41 , 3, 169 (1964).

Vorteilhafterweise soll sich das zu verwendende Lecithin in der Polymervorstufe möglichst vollständig lösen. Außerdem ist es günstig, wenn das Lecithin nach Auflösung keine Färbung der Polymervorstufe hervorruft. Diese Voraussetzungen können leicht in einem Handversuch überprüft werden. Unter den genannten Aspekten hat sich z.B. das Handelsprodukt Sojalecithin STA® der Fa. Gg. M. Langer u. Co.,

(Lanco), Ritterhude bei Bremen) als besonders günstig erwiesen.
Der Anteil des Lecithins beträgt vorzugsweise zwischen 0,01 und höchstens 5 Gew.-% bezogen auf das Gießharz, speziell zwischen 0,1 und 5 Gew.-%. Vorteilhaft setzt man der flüssigen Polymerstufe FP 0,2 bis 5 Gew.-%, vorzugsweise 1 ± 0,5 Gew.-% Lecithin zu.

## Die Füllstoffe

Als Füllstoffe eignen sich die einschlägig für Gießharze verwendeten feinteiligen, anorganischen Materialien. Zweckmäßig wird eine Korngröße von 100 µm Durchmesser, vorzugsweise 50 µm, nicht überschritten. Vorzugsweise sollen zahlenmäßig mindestens 95 % der Teilchen ≤ 10 µm groß sein. Als bevorzugte Korngrößenbereiche können 0,1 bis 10 µm angesehen werden. Teilchen mit einer Größe von ≤0,1 µm sollen nach Möglichkeit nicht mehr als 10 % der Gesamtteilchenzahl ausmachen. Die Teilchengröße wird gemäß den üblichen Verfahren bestimmt. (Vgl. B. Scarlett, in "Filtration & Seperation", pg. 215, 1965). Zur Teilchengrößenbestimmung wenden die jeweils größten Abmessungen der Partikel herangezogen. Bevorzugt werden kornförmige Partikel.

Gelegentlich kann es vorteilhaft sein, die Partikel durch Erhitzen, etwa auf 150° C, von adsorptiv gebundener Feuchtigkeit zu befreien. Durch Tempern kann der Wassergehalt noch weiter herabgesetzt werden. Die Füllstoffe können anorganische in der Natur vorkommende oder synthetisch hergestellte Produkte sein. Die mechanischen Eigenschaften wie Härte, elastischer Schermodul bemessen sich nach dem vorgesehenen Anwendungszweck der Gießharze. Dabei kann die Einstellung eines elastischen Schermoduls von wenigstens 5 G $Nm^{-2}$ vorteilhaft sein. Geeignet sind z.B. Mineralien wie Aluminiumoxide und Derivate z.B. Alkali- und Erdalkalidoppeloxide, Tone, Siliciumdioxid in seinen verschiedenen Modifikationen, Silikate, Aluminosilikate, Carbonate, Phosphate, Sulfate, Sulfide, Oxide, Kohle, Metalle und Metalllegierungen. Ferner sind synthetische Materialien wie Glasmehl, Keramik, Porzellan, Schlacke, fein verteiltes synthetisches $SiO_2$ geeignet.
Genannt seien Kieselsäuremodifiationen wie Quarz (Quarzmehl), Tridymit und Cristobalit, ferner Kaolin, Talcum, Glimmer, Feldspat, Apatit, Baryte, Gips, Kreide, Kalkstein, Dolomit. Gegebenenfalls können auch Gemische von Füllstoffen angewendet werden. Der Füllstoffanteil an den Gießharzen der vorliegenden Erfindung beträgt mindestens 20 Gew.-%. Im allgemeinen wird ein Anteil von 80 Gew.-% nicht überschritten. Als Richtwert sei ein Füllstoffgehalt der Gießharze von 50 - 80 Gew.-% angegeben. Die Herstellung der Füllstoffe in den zweckmäßigen Korngrößen kann nach den bekannten Verfahren erfolgen, z.B. durch Brechen und Mahlen. Besonders bevorzugt ist Cristobalit.

## Die Organosilicium-Komponente

Die Organosilicium-Komponente dient in an sich bekannter Weise als Haftvermittler zwischen Füllstoff und organischer Phase. Es können somit die aus dem Stand der Technik bekannten Organosilicium-Verbindungen eingesetzt werden. Bei Anwendung der Organosiliciumverbindungen gemäß der vorliegenden Erfindung wird in der Regel kein Gebrauch gemacht von Metallsäureestern von Metallen der IV. oder V. Nebengruppe des Periodensystems.
In erster Linie handelt es sich um funktionelle Organosiliciumverbindungen mit mindestens einer ethylenisch ungesättigten Gruppe im Molekül. Der die ethylenisch ungesättigte Gruppe tragende funktionelle Rest ist im allgemeinen über ein C-Atom mit dem zentralen Siliciumatom verknüpft. Die verbleibenden Liganden am Silicium sind in der Regel Alkoxyreste mit 1 bis 6 Kohlenstoffatomen (wobei sich noch Etherbrücken im Alkylrest befinden können). Genannt seien z.B. die Vinyltrialkoxysilane. Die CC-Doppelbindung kann auch über ein oder mehrere Kohlenstoffatome mit dem Si-Atom verbunden sein, z.B. in Form der Allyltrialkoxysilane oder der γ-Methacryloyloxypropyltrialkoxysilane. Auch Dialkoxysilane können verwendet werden, wobei am Si-Atom ein weiterer funktioneller Rest mit einer CC-Doppelbindung, meist des gleichen Typs, oder ein Alkylrest mit vorzugsweise 1 bis 6 Kohlenstoffatomen gebunden ist. Es können auch verschiedene Typen von Organosiliciumverbindungen in der Organosilicium-Komponente vorhanden sein. Genannt seien z.B. das Vinyltrimethoxysilan, Vinyltriethoxysilan, Vinyltriacetoxysilan, Vinyltris(methoxyethoxy)-silan, Divinyldimethoxysilan, Vinylmethyldimethoxysilan, Vinyltrichlorsilan, γ-Methacryloyloxypropyltrimethoxysilan oder γ-Methacryloyloxypropyltris(methoxyethoxy)-silan. Vorteilhafterweise werden die Organosiliciumverbindungen zusammen mit Katalysatoren vom Amintyp, insbesondere vom Typ der Alkylamine, mit 3 bis 6 Kohlenstoffatomen, speziell mit n-Butylamin angewendet. Als Richtwert für die Anwendung des Amin-Katalysators kann 0,5 bis 10 Gew.-%, vorzugsweise 1 bis 5 Gew.-% der Organosiliciumkomponente

angenommen werden.
Im allgemeinen beträgt das Gewichtsverhältnis anorganischer Füllstoff zu Organosiliciumverbindung 500 : 1 bis 20 : 1, vorzugsweise 50 ± 25 : 1.

Herstellung der härtbaren Gießharze

Zur Herstellung der erfindungsgemäßen härtbaren Gießharze geht man zweckmäßig von der flüssigen Polymervorstufe FP aus, welche die Monomeren enthält und nach Zusatz des Lecithins die organische Phase bildet. Das Lecithin soll sich, wie bereits ausgeführt, möglichst vollständig lösen und homogen verteilt sein. In die organische Phase wird nun zweckmäßig mit Hilfe mechanischer Dissolver der feinteilige anorganische Füllstoff eingetragen und verteilt. Der Vorgang ist in der Regel innerhalb 15 - 20 Minuten abgeschlossen. Man erhält nach diesem Schritt im allgemeinen zunächst eine dickflüssige Suspension. Anschließend wird die Silanisierung durchgeführt durch Zugabe der Organosilicium-Komponente, vorteilhaft zusammen mit Alkylamin als Katalysator. Man kann vorteilhaft die Silanisierung durch Bewegen unterstützen, beispielsweise 24 Stunden auf der Rollbank bewegen. Alternativ kann die Silanisierung auch durch Aufheizen auf 95° C bewirkt werden. Anschließend löst man in dem Ansatz das Präpolymerisat und schließlich die Polymerisationshilfsmittel. Im Zuge der Silanisierung wird der Ansatz in eine vollentflockte, dünnflüssige Suspension überführt. Vorzugsweise kann die Organosiliciumverbindung der flüssigen Polymervorstufe FP zusammen mit dem Lecithin auch von Anfang an zugesetzt werden.

Als Polymerisationshilfsmittel kommen primär an sich bekannte Polymerisationsbeschleuniger infrage. Grundsätzlich sind alle diejenigen besonders geeignet, die bereits bei tiefen Temperaturen einen hohen Radikalstrom liefern. (Vgl. Brandrup - Immergut, "Polymer Handbook", 2$^{nd}$, Ed. J. Wiley) wie z.B. die Peroxicarbonate, insbesondere das Bis-(4-tert.-butylcyclohexyl)peroxidicarbonat in Mengen von 1 bis 5 Gew.-%, bezogen auf die Monomeren M. Zweck mäßigerweise geschieht der Zusatz der Beschleuniger erst kurz vor dem Aushärten der Harze.
Den erfindungsgemäßen flüssigen Gießharzen können zusätzlich zu den feinteiligen Füllstoffen noch Verstärkerstoffe zugesetzt werden, beispielsweise vom Fasertyp. Zu den geeigneten Faserstoffen gehören z.B. Glasfasern, Mineralfasern, Steinfasern. Der Anteil dieser Verstärkerstoffe liegt im allgemeinen unterhalb des Gehalts an den feinteiligen Füllstoffen.
Um farbige Formteile herstellen zu können, kann man der organischen Phase auch Pigmente und/oder Farbstoffe zusetzen. Möglich ist auch die Anwendung an sich bekannter "Master batches", beispielsweise gemäß der nach DE-OS-33 23 951 hergestellten Art. Genannt sei z.B. die Anwendung von Eisenoxid, Titandioxid, Zinkweiß, Ultramarinblau, Ruß.
Das erfindungsgemäße Gießharz hat in dem für die Weiterverarbeitung relevanten Schergeschwindigkeitsbereich ein nahezu konstantes niedriges Viskositätsniveau.

Herstellung der Gußstücke

Das mit dem Beschleuniger versetzte härtbare flüssige Gießharz läßt sich sehr gut in die üblichen Gußformen vergießen. Vorteilhafterweise wird vor dem Verfüllen evakuiert. Die Härtung geschieht vorzugsweise thermisch, beispielsweise durch Erhitzen auf 50 - 80° C während 15 - 30 Minuten, zweckmäßig im Trockenschrank. Die Härtung kann sowohl unter Anwendung von Druck als auch ohne Druck erfolgen. Mit Hilfe des erfindungsgemäßen Gießharzes lassen sich die vielfältigsten Formen füllen und eine technisch einwandfreie Polymerisation durchführen. Es können auf diese Weise Platten, Schüsseln, Waschbecken, Spülbecken, WC-Becken, Formkörper für die Bauindustrie, Maschinenfundamente, Behälter u.a. hergestellt werden. Die Vorteile dieser Art der Herstellung sind: eine große Formenvielfalt - auch relativ komplizierte Formen werden zugänglich - geringer Energiebedarf, geringer Personalaufwand, ein hoher Grad an Zuverlässigkeit, wenig Nacharbeitungszeit. Die Gießharze gemäß der vorliegenden Erfindung sind zudem relativ leicht zugänglich und umweltfreundlich. Hervorzuheben ist die tadellose Oberfläche sowie die hohe Steifigkeit und Festigkeit der daraus hergestellten Formkörper.

Die folgenden Beispiele dienen zur Erläuterung der Erfindung. Die Bestimmung der reduzierten Viskosität $\eta_{spez}/C$ geschieht in Chloroform bei 20° C im Micro-Ubbelohde-Viskosimeter. (Vgl. Houben-Weyl, Methoden der organischen Chemie, Bd. 14/1 , Seite 81-84, Georg-Thieme-Verlag, 1961).

Beispiel 1

Herstellung des Gießharzes

26,2 Gew.-Teile Methylmethacrylat im Gemisch mit 0,5 Gew.-Teilen Äthylenglycoldimethacrylat werden mit 0,25 Gew.-Teilen Lecithin (Sojalecithin STA®, Produkt der Fa. M. Langer u. Co., Ritterhude bei Bremen) homogen vermischt. Anschließend gibt man 1,5 Gew.-Teile γ-Methacryloyloxypropyl-trimethoxysilan und 0,025 Gew.-Teile Butylamin zu. Dazu werden 70 Gew.-Teile Cristobalit (Cristobalit T 6000, Korngröße 0,1 - 10 µm, Produkt der Fa. Quarzwerke, Köln) am Dissolver eingetragen. Der Ansatz wird nun 24 Stunden auf der Rollbank behandelt. Man erhält eine völlig entflockte, dünnflüssige Dispersion. Anschließend gibt man 1,5 Gew.-Teile eines Copolymerisats aus Methylmethacrylat und Methylacrylat (90 : 10 Gew.-Teile) mit einem $\eta_{spez}$/C-Wert von 110ml/g (Produkt PLEX 8640F® der Röhm GmbH) zu und behandelt auf der Rollbank bis zur Auflösung. Mit ähnlich gutem Erfolg kann man die Organosiliciumverbindung auch von Anfang an zusetzen.

Beispiel 2

Herstellung eines Gußstücks

In das Gießharz gemäß Beispiel 1 werden 0,6 Gew.-Teile Bis-(4-tert.-butylcyclohexyl)peroxydicarbonat als Initiator eingerührt. Anschließend wird evakuiert. Dann gießt man mit dem Gemisch Platten der Abmessung 200 x 200 x 4 mm. Die Härtung wird während ca. 25 Minuten im Trockenschrank bei 55 °C und anschließend 60 Minuten bei 80 °C durchgeführt. Aus den erhaltenen Platten werden zur Bestimmung der Biegefestigkeit Normkörper der Abmessungen 50 x 6 x 4 mm ausgesägt.

Bestimmt wurde: Biegefestigkeit (nach DIN 53452)
135 N/mm²
Schlagzähigkeit (nach DIN 53453)
6,0 KJ/m²

Beispiel 3

Herstellung eines Gießharzes

Die Durchführung geschieht analog Beispiel 1 bis zur Zugabe des Cristobalits, wobei γ-Methacryloyloxypropyl-trimethoxysilan von Anfang an zugesetzt wurde. Danach wird der Ansatz innerhalb 30 Minuten auf 100 °C erhitzt, danach auf Raumtemperatur abkühlen gelassen. Danach werden 1,5 Gew.-% des Copolymerisats aus Methylmethacrylat und Methylacrylat (PLEX 8640F®) zugesetzt und weiter wie in Beispiel 1 verfahren. Proben aus einem analog Beispiel 2 hergestellten Gußstück ergaben eine Schlagzähigkeit (nach DIN 53453) von 5,8 KJ/m².

## Ansprüche

1. Härtbare Gießharze auf Basis von fließfähigen, härtbaren organischen Polymervorstufen, mit einem Gehalt an feinteiligen anorganischen Füllstoffen von mindestens 20 Gew.-% und bis zu 80 Gew.-% und einer polymerisationsfähigen Organosiliciumkomponente als Haftvermittler,
dadurch gekennzeichnet,
daß die aus den organischen Bestandteilen gebildete flüssige Phase Lecithin enthält in Anteilen zwischen 0,01 und höchstens 5 Gew.-% bezogen auf das Gießharz.

2. Härtbare Gießharze gemäß Anspruch 1, dadurch gekennzeichnet, daß der Anteil der feinteiligen, anorganischen Füllstoffe 50 bis 80 Gew.-% beträgt.

3. Härtbare Gießharze gemäß den Ansprüchen 1 bis 2, dadurch gekennzeichnet, daß die fließfähigen, härtbaren organischen Polymervorstufen FP zu mindestens 50 Gew.-% aus mindestens einem Ester der Acryl- und/oder der Methacrylsäure aufgebaut sind.

4. Härtbare Gießharze gemäß Anspruch 3, dadurch gekennzeichnet, daß die fließfähigen härtbaren organischen Polymervorstufen 0,01 bis 10 Gew.-% an vernetzenden Monomeren enthalten.

5. Härtbare Gießharze gemäß Anspruch 1, dadurch gekennzeichnet, daß als Lecithin solches eingesetzt wird, das aus Soja gewonnen wurde.

6. Härtbare Gießharze gemäß den Ansprüchen 1 und 5, dadurch gekennzeichnet, daß das Lecithin einen HLB-(hydrophile-lipophile balance) Wert von ca. 3,6 besitzt.

7. Härtbare Gießharze gemäß den Ansprüchen 1 und 5 bis 6, dadurch gekennzeichnet, daß das Lecithin in der aus den organischen Bestandteilen gebildeten Phase praktisch vollständig gelöst ist.

8. Härtbare Gießharze gemäß den Ansprüchen 1 bis 7, dadurch gekennzeichnet, daß als polymerisationsfähige Organosiliciumkomponente solche Verbindungen eingesetzt werden, die mindestens eine ethylenisch ungesättigte Gruppe im Molekül besitzen.

9. Härtbare Gießharze gemäß Anspruch 8, dadurch gekennzeichnet, daß γ-Methacryloyloxypropyltrialkoxysilane eingesetzt werden.

10. Härtbare Gießharze gemäß den Ansprüchen 8 und 9, dadurch gekennzeichnet, daß als der polymerisationsfähigen Organosiliciumkomponente zugeordnete Katalysatoren Alkylamine eingesetzt werden.

11. Härtbare Gießharze gemäß den Ansprüchen 1 bis 10, dadurch gekennzeichnet, daß das Gewichtsverhältnis Füllstoff zu Organosiliciumkomponente 500 : 1 bis 20 : 1, vorzugsweise 50 ± 25 : 1 beträgt.

12. Härtbare Gießharze gemäß den Ansprüchen 1 und 8 bis 11, dadurch gekennzeichnet, daß die Organosiliciumkomponente von Anfang an einen Bestandteil der aus organischen Bestandteilen gebildeten flüssigen Phase bildet.

## Claims

1. Hardenable casting resins based on flowable, hardenable organic polymer precursors, containing finely divided inorganic filler in an amount of at least 20% by weight and up to 80% by weight and a polymerizable organo silicon component as adhesion promoter, characterised in that the liquid phase formed from the organic constituents contains lecithin in amounts of between 0.01 and not more than 5% by weight, based on the casting resin.

2. Hardenable casting resins according to claim 1, characterised in that the proportion of finely divided inorganic fillers is from 50 to 80% by weight.

3. Hardenable casting resins according to claims 1 and 2, characterised in that the flowable, hardenable organic polymer precursors FP are made up of at least 50% by weight of at least 1 ester of acrylic and/or methacrylic acid.

4. Hardenable casting resins according to claim 3, characterised in that the flowable, hardenable organic polymer precursors contain 0.01 to 10% by weight of cross-linking monomers.

5. Hardenable casting resins according to claim 1, characterised in that the lecithin used is one which is obtained from soya.

6. Hardenable casting resins according to claims 1 and 5, characterised in that the lecithin has an HLB (hydrophile-lipophile balance) value of about 3.6.

7. Hardenable casting resins according to claims 1 and 5 to 6, characterised in that the lecithin is virtually totally dissolved in the phase formed from the organic constituents.

8. Hardenable casting resins according to claims 1 to 7; characterised in that the polymerizable organo silicon components used are those compounds which have at least one ethylenically unsaturated group in the molecule.

9. Hardenable casting resins according to claim 8, characterised in that gamma-methacryloyloxypropyltrialkoxysilanes are used.

10. Hardenable casting resins according to claims 8 and 9, characterised in that alkylamines are used as the catalyst associated with the polymerizable organo silicon component.

11. Hardenable casting resins according to claims 1 to 10, characterised in that the weight ratio of filler to organo silicon component is 500:1 to 20:1, preferably 50 $\pm$ 25:1.

12. Hardenable casting resins according to claims 1 and 8 to 11, characterised in that, right from the start, the organo silicon component forms part of the liquid phase made up of organic constituents.

**Revendications**

1. Résines de coulée durcissables à base de progéniteurs de polymères organiques durcissables fluides, ayant une teneur en matières de charge inorganiques finement divisées comprise entre 20% en poids au moins et 80% en poids et contenant un composant organosilicique polymérisable en tant qu'agent de pontage, caractérisées en ce que la phase liquide constituée par les composants organiques contient de la lécithine dans des proportions comprises entre 0,01 et 5% en poids au maximum par rapport à la résine de coulée.

2. Résines de coulée durcissables selon la revendication 1, caractérisées en ce que la proportion des matières de charge inorganiques finement divisées est de 50 à 80% en poids.

3. Résines de coulée durcissables selon la revendication 1 ou 2, caractérisées en ce que les progéniteurs de polymères organiques durcissables fluides FP sont constitués pour 50% en poids au moins d'au moins un ester de l'acide acrylique et/ou méthacrylique.

4. Résines de coulée durcissables selon la revendication 3, caractérisées en ce que les progéniteurs de polymères organiques durcissables fluides contiennent de 0,01 à 10% en poids de monomères réticulants.

5. Résines de coulée durcissables selon la revendication 1, caractérisées en ce qu'on utilise, comme lécithine, une lécithine qui a été obtenue à partir de soja.

6. Résines de coulée durcissables selon les revendications 1 et 5, caractérisées en ce que la lécithine possède un indice HLB (équilibre hydrophilelipophile) d'environ 3,6.

7. Résines de coulée durcissables selon l'une quelconque des revendications 1, 5 et 6, caractérisees en ce que la lécithine est dissoute de façon pratiquement complète dans la phase organique constituée par les composants organiques.

8. Résines de coulée durcissables selon l'une quelconque des revendications 1 à 7, caractérisées en ce qu'on utilise, comme composant organosilicique polymérisable, des composés qui comportent au moins un groupement insaturé éthyléniquement dans la molécule.

9. Résines de coulée durcissables selon la revendication 8, caractérisées en ce qu'on utilise du $\gamma$-

méthacryloyloxypropyltrialcoxysilane.

**10.** Résines de coulée durcissables selon la revendication 8 ou 9, caractérisées en ce qu'on utilise des alkylamines comme catalyseurs associés au composant organosilicique polymérisable.

**11.** Résines de coulée durcissables selon l'une quelconque des revendications 1 à 10, caractérisées en ce que le rapport en poids de la matière de charge au composant organosilicique se situe entre 500 : 1 et 20 : 1, de préférence à 50 ± 25 : 1.

**12.** Résines de coulée durcissables selon l'une quelconque des revendications 1 et 8 à 11, caractérisées en ce que dès le début, le composant organosilicique constitue un composant de la phase liquide constituée par des composants organiques.